# EUROPÄISCHE PATENTSCHRIFT

(11) **EP 1 576 869 B1**
(45) Veröffentlichungstag und Bekanntmachung des Hinweises auf die Patenterteilung: **20.04.2011**
(21) Anmeldenummer: 05003748.0
(22) Anmeldetag: 22.02.2005
(51) Int. Cl.: A01D 41/127

(54) **Messvorrichtung zur Messung von Oberflächenfeuchte**
Measuring device or measuring superficial humidity
Dispositif de mesure pour mesurer l'humidité superficielle

(30) Priorität: 10.03.2004 DE 102004011982
(43) Veröffentlichungstag der Anmeldung: 21.09.2005
(73) Patentinhaber: CLAAS Selbstfahrende Erntemaschinen GmbH, 33428 Harsewinkel (DE)
(72) Erfinder: Dammann, Ludwig, 33428 Harsewinkel (DE); Quincke, Gunnar, 59494 Soest (DE)

(56) Entgegenhaltungen:
- US-A- 4 378 168
- US-A- 5 586 033
- US-A- 6 121 782
- US-A1- 2003 216 158

## Beschreibung

Die Erfindung betrifft eine landwirtschaftliche Arbeitsmaschine mit einer Messvorrichtung nach dem Oberbegriff des Anspruchs 1.

Aus dem Stand der Technik sind eine Vielzahl von Messeinrichtungen bekannt mit denen die Betriebsparameter der Arbeitsorgane einer landwirtschaftlichen Arbeitsmaschine, der Fluss des Erntegutes durch die Arbeitsmaschine oder die Eigenschaften des Erntegutes erfasst werden. Dokument US 20030216158 A1 offenbart eine landwirtschaftliche Arbeitsmaschine mit allen Kennzeichnen aus dem Oberbegriff von Anspruch 1.

Aus der EP 0 303 899 B1 ist eine Vorrichtung zum Ermitteln der Masse eines Gutes bekannt geworden, bei der die Masse der geernteten Getreidekörner von einem Massenrechner aus dem Volumen und der Dichte des Erntegutes berechnet wird. Das Volumen wird hierzu über einen Füllstandsensor gemessen, der den Inhalt des Erntegutbehälters erfasst. Die Dichte ist in einem Dichterechner hinterlegt, wobei die zur Ermittlung der Masse relevante Dichte in Abhängigkeit von der Gutfeuchte gespeichert ist. Die Feuchte der geernteten Getreidekörner wird bei dieser Vorrichtung entweder von Hand eingegeben oder über Sensoren ermittelt.

Bislang wird die Außenluftfeuchte während der Erntefahrt nur vom Bediener wahrgenommen, wenn sie auf dem Feld in Form von Dunst oder Nebel sichtbar wird oder bei Arbeitsmaschinen ohne Kabine direkt in Form von Feuchte und Kälte vom Bediener fühlbar ist. Weiterhin ist den meisten Bedienern einer landwirtschaftlichen Arbeitsmaschine bekannt, das zum Ende des Tages bei sinkenden Außentemperaturen die relative Luftfeuchte der Außenluft steigt. Beim Erreichen des Taupunkts kondensiert Wasser auf der Oberfläche des zu erntenden Erntegutes, was zu schlechteren Erntebedingungen und einem qualitativ schlechteren Erntegut führt. Der erfahrene Bediener passt die Betriebsparameter an die sich ändernden Bedingungen an.

Die bekannten Messvorrichtungen haben den Nachteil, dass sie die Feuchte der geernteten Getreidekörner und nicht die Oberflächenfeuchte auf dem Erntegut sensieren. Die Oberflächenfeuchte des Ernteguts wird bei der Einstellung der Betriebsparameter der Arbeitsorgane und/oder des Aufnahmevorsatzes bislang nicht berücksichtigt.

Es ist Aufgabe der Erfindung eine Vorrichtung zu entwickeln, welche frühzeitig sich ändernde Erntebedingungen wahrnimmt und eine frühzeitige Anpassung der Betriebsparameter landwirtschaftlicher Arbeitsmaschinen ermöglicht.

Diese Aufgabe wird erfindungsgemäß durch die im Patentanspruch 1 genannten Merkmale gelöst. Weitere vorteilhafte Ausführungen des Erfindungsgegenstandes ergeben sich aus den übrigen Ansprüchen.

Indem wenigstens ein Taupunktsensor zur Sensierung der das Erntegut umgebenden Luft an der Arbeitsmaschine vorgesehen ist, kann ein aus dem Wasserdampfanteil der Luft kondensierter Wasseranteil sensiert werden.

Dadurch, dass der Taupunktsensor in unmittelbarer Nähe zum Erntegut am Aufnahmevorsatz und/oder in unmittelbarer Nähe zum Erntegut am Arbeitsorgan angeordnet ist, kann das vom Taupunktsensor generierte Taupunktsignal stellvertretend für die auf dem Erntegut und/oder dem Arbeitsorgan vorhandene Oberflächenfeuchte angesehen werden.

Damit die auf dem Erntegut kondensierte Oberflächenfeuchte erfassbar wird, erzeugt der Taupunktsensor ein vom kondensierten Wasserdampfanteil der Luft abhängiges Taupunktsignal.

Eine besonders vorteilhafte Ausführung ergibt sich, wenn der Taupunktsensor mit einer Auswerte- und Anzeigeeinheit verbunden ist, die aus dem Taupunktsignal eine Taupunkttemperatur berechnet und anzeigt, so dass der Bediener die vom Taupunktsensor gemessene Messgröße überwachen kann.

Eine besonders wirtschaftliche Ausführung ist möglich, wenn ein Bediener aufgrund der auf der Auswerte- und Anzeigeeinheit angezeigten Taupunkttemperatur die Einstellung wenigstens eines Betriebsparameters wenigstens eines Arbeitorgans und/oder wenigstens eines Aufnahmevorsatzes und/oder die Fahrgeschwindigkeit der landwirtschaftlichen Arbeitsmaschine verändert.

Damit in vorteilhafterweise Weise eine vollautomatische Regelung der Betriebsparameter möglich ist, ist der Taupunktsensor mit einer Steuereinheit verbunden, die einen oder mehrere Betriebsparameter wenigstens eines Arbeitsorgans und/oder wenigstens eines Aufnahmevorsatzes der landwirtschaftlichen Arbeitsmaschine in Abhängigkeit von dem vom Taupunktsensor an die Steuereinheit übergebenen Taupunktsignal ändert.

Die Steuereinheit beinhaltet vorteilhafterweise wenigstens eine Kennlinie, mit der wenigstens ein Betriebsparameter geregelt wird. Die optimalen Betriebsparameter werden somit ohne zutun des Fahrers abgestimmt, wodurch der Fahrer entlastet wird.

Dadurch, dass die landwirtschaftliche Arbeitsmaschine ein selbstfahrender Mähdrescher mit einem als Schneidwerk ausgeführtem Aufnahmevorsatz ist, wobei mehrere Taupunktsensoren in unterschiedlichen Höhen an dem Schneidwerk angeordnet sind, kann die Luft in unterschiedlichen Höhen im Bereich des zu erntenden Ernteguts sensiert werden.

Eine besonders vorteilhafte Ausführung ergibt sich, wenn das Schneidwerk mit der Steuereinheit verbunden ist und die Steuereinheit eine Schneidwerkshöhe des Schneidwerks in Abhängigkeit vom Taupunktsignal regelt, so dass bei der Einstellung des Schneidwerks die Oberflächenfeuchte des zu erntenden Erntegutes berücksichtigt wird.

Vorteilhafterweise ist der Mähdrescher zumindest mit wenigstens einem Vorfahrtregier ausgestattet, der mit der Steuereinheit verbunden ist, wobei die Steuereinheit die Fahrgeschwindigkeit des Mähdreschers während der Erntefahrt in Abhängigkeit von dem Taupunktsignal regelt, so dass die Fahrgeschwindigkeit an die Oberflächenfeuchte des Ernteguts anpassbar ist.

In weiterer Ausgestaltung ist der Mähdrescher zumindest mit einem Dreschwerk mit einer Dreschtrommel und wenigstens einem Dreschkorb ausgestattet und das Dreschwerk ist mit der Steuereinheit verbunden, wobei die Steuereinheit zumindest eine Dreschtrommeldrehzahl der wenigstens einen Dreschtrommel und/oder einen Dreschspalt zwischen dem wenigstens einen Dreschkorb und der Dreschtrommel in Abhängigkeit von dem Taupunktsignal regelt, um die optimalen Betriebsparameter des Dreschwerks für die ermittelte Oberflächenfeuchte des zu erntenden Ernteguts einzustellen.

Dadurch, dass der Mähdrescher zumindest mit wenigstens einer Reinigungseinrichtung mit wenigstens einem Sieb und wenigstens einem Gebläse ausgestattet ist und die Reinigungseinrichtung mit der Steuereinheit verbunden ist, wobei die Steuereinheit zumindest eine Maschenweite des wenigstens einen Siebes und/oder eine Gebläsedrehzahl des wenigstens einen Gebläses und/oder eine Schwingfrequenz der Reinigungseinrichtung in Abhängigkeit von dem Taupunktsignal regelt, kann bei der Wahl der Betriebsparameter die Oberflächenfeuchte des zu erntenden Erntegutes mit einbezogen werden.

Um die Oberflächenfeuchte des der Reinigungseinrichtung zugeführten Gemischs aus Körnern, Kurzstroh und Spreu zu erfassen, ist wenigstens ein weiterer Taupunktsensor im Bereich der Siebe der Reinigungseinrichtung angeordnet.

Vorteilhafterweise ist ein weiterer Taupunktsensor im Bereich einer Trennvorrichtung des Mähdreschers angeordnet, so dass die Oberflächenfeuchte des auf den Hordenschüttlern geförderten, aus ausgedroschenen Halmen bestehenden Gutstroms erfasst wird.

Damit die Oberflächenfeuchte des geernteten Erntguts erfassbar ist, ist ein weiterer Taupunktsensor an dem Einzugsschacht des Mähdreschers angeordnet.

Auch ist denkbar, dass ein weiterer Taupunktsensor im Bereich des Dreschwerks angeordnet ist, so dass die Oberflächenfeuchte des am Dreschkorb abgeschiedenen Korn-Spreu-Gemischs erfassbar ist.

Weitere vorteilhafte Ausführungen sind Gegenstand weiterer Unteransprüche und werden nachfolgend an Hand eines in einer Figur dargestellten Ausführungsbeispiels beschrieben. Es zeigt:

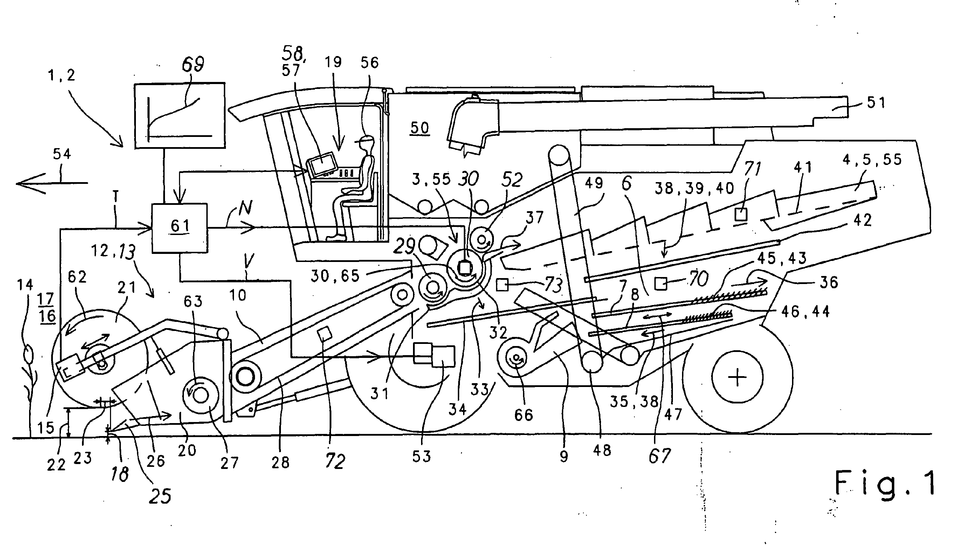

- Fig.1: einen schematischen Querschnitt durch die Seitenansicht eines Mähdreschers.

In der Fig. 1 ist eine als selbstfahrender Mähdrescher 1 ausgeführte landwirtschaftliche Arbeitsmaschine 2 in der Seitenansicht während der Erntefahrt dargestellt. Bei dem Ausführungsbeispiel handelt es sich um einen Mähdrescher 1 mit einem sogenannte. Tangentialdreschwerk 3 und einem dahinter angeordneten Hordenschüttler 4 als Trennvorrichtung 5. Unterhalb des Hordenschüttlers 4 befindet sich eine Reinigungseinrichtung 6, bestehend aus zwei übereinander angeordneten in der Regel schwingend angetriebenen Sieben 7, 8 und einem Gebläse 9.
Frontseitig weist der Mähdrescher 1 einen vertikal schwenkbaren Einzugsschacht 10 auf, an dem ein als Schneidwerk 12 ausgeführter Aufnahmevorsatz 13 angeordnet ist. Mit dem schwenkbaren Einzugsschacht 10 ist das Schneidwerk 12 auf eine gewünschte Schneidwerkshöhe 18 einstellbar. In unmittelbarer Nähe zum Erntegut 14 ist ein erfindungsgemäßer Taupunktsensor 15 an dem Schneidwerk 12 zur Sensierung einer das Erntegut 14 umgebenden Luft 16 angeordnet. Der Taupunktsensor 15 detektiert einen aus der Luft 16 kondensierten Wasseranteil 17 und generiert hieraus zur Oberflächenfeuchte auf dem zu erntenden Erntegut 14 proportionale Taupunktsignale T, die an eine noch näher zu erläuternde Auswert-und Anzeigeeinheit 19 übergeben werden. Es liegt im Rahmen der Erfindung, dass mehrere Taupunktsensoren 15 in unterschiedlichen Höhen am Schneidwerk 12 angeordnet sein können.
Das Schneidwerk 12 besteht aus einem Schneidtisch 20, und aus einer an dem Schneidtisch 20 befestigten rotierend angetriebenen Haspel 21. Die Höhe 22 der Haspel 21 und ihr Abstand 23 in horizontaler Richtung bezüglich des Schneidtischs 20 ist veränderbar. Das zu erntende Erntegut 14 wird mit einem an der vorderen Kante des Schneidtisches 20 angebrachten, oszillierenden Messerbalken 25 abgeschnitten und das geschnittene Erntegut 26 anschließend mit Hilfe der Haspel 21 zu einer im Schneidtisch 20 angeordneten, rotierend angetriebenen Einzugsschnecke 27 gefördert. Die Einzugsschnecke 27 führt das Erntegut dem Einzugsschacht 10 zu. In dem Einzugsschacht 10 läuft ein Schrägförderer 28, der das Erntegut 26 an die Dreschorgane 29, 30, 31 des Dreschwerks 3 übergibt. Das aus dem Schrägförderer 28 kommende Erntegut 26 wird durch die rotierend angetriebene Vorbeschleunigertrommel 29 erfasst und weiter von der rotierend angetriebenen Dreschtrommel 30 durch einen zwischen der Dreschtrommel 30 und dem Dreschkorb 31 befindlichen, verstellbaren Dreschspalt 32 gezogen. Dabei bearbeitet die Dreschtrommel 31 das Erntegut 26 mechanisch in dessen Folge ein Korn-Spreu-Gemisch 33 am Dreschkorb 31 abgeschieden und über einen Vorbereitungsboden 34 der Reinigungseinrichtung 6 zugeführt wird, um die Körner 35 von den Nichtkornbestandteilen 36, d. h. von Halm - und Spreuteilen, zu trennen.

Vom Dreschwerk 3 gelangt ein weiterer im Wesentlichen aus ausgedroschenen Halmen bestehende Gutstrom 37 über die entgegen dem Uhrzeigersinn rotierende Wendetrommel 52 auf die als Hordenschüttler 4 ausgeführte Trenneinrichtung 5, die den Gutstrom 37 in den rückwärtigen Bereich des Mähdreschers 1 fördert. Dabei werden die noch im Gutstrom 37 befindlichen Körner 38 sowie eventuell Kurzstroh 39 und Spreu 40 abgetrennt, indem sie durch die mit Sieböffnungen 41 versehenen Hordenschüttler 4 hindurch auf einen Rücklaufboden 42 fallen.
Es liegt im Rahmen der Erfindung, dass die Dreschorgane 29, 30, 31 und/ oder die Trenneinrichtung 5 in an sich bekannter und deshalb nicht dargestellter Weise durch rotierende Dresch- und/oder Trennrotoren ersetzt sein können.
Der Rücklaufboden 42 transportiert Körner 38, Kurzstroh 39 und Spreu 40 zum Vorbereitungsboden 34. Die Körner 38, das Kurzstroh 39 und die Spreu 40 gelangen schließlich ebenfalls über den Vorbereitungsboden 34 in die Reinigungseinrichtung 6, in welcher die Körner 38 vom Kurzstroh 39 und Spreu 40 getrennt werden.
Dies erfolgt in der Weise, dass durch die Sieböffnungen 43, 44 im Obersieb 7 und im Untersieb 8 mittels des Gebläses 9 Wind hindurchgefördert wird, welcher das über die Siebe 7, 8 in den hinteren Bereich des Mähdreschers 1 geführte Erntegut 26 auflockert und für das Heraustrennen der spezifisch leichteren Spreu- und Kurzstrohanteile 39, 40 sorgt, während die schweren Erntegutkörner 38 durch die Sieböffnungen 43, 44 fallen. Die Siebe 7, 8 sind teilweise übereinander angeordnet, so dass das Erntegut 26 in zwei verschiedenen Stufen unterschiedlich fein gesiebt wird, wobei die Maschenweiten 45, 46 der Siebe 7, 8 verstellbar sind. Durch die Verstellung der Maschenweiten 45, 46 und /oder der Drehzahl des Gebläses 9 lassen sich der Anteil der Menge, die durch die Sieböffnungen 43, 44 hindurchfällt, der sogenannte Siebdurchgang und der Anteil der über das Sieb transportiert wird, der sogenannte Siebüberlauf regeln. Ebenso lässt sich die sogenannte Reinigungswirkung durch eine Änderung der Schwingfrequenz 67 der Reinigungseinrichtung 6 beeinflussen.
Die Körner 15, 38 welche durch beide Siebe 7, 8 der Reinigungsvorrichtung 6 hindurch gelangt sind, fallen auf einen schräg verlaufenden Auffang- und Führungsboden 47 und gleiten in eine Kornförderschnecke 48, die die Körner 38 einem Kornelevator 49 zuführt. Sie werden dann von dem Kornelevator 49 in einen Korntank 50 des Mähdreschers 1 befördert und können dort bei Bedarf mit einem Tankentleerförderer 51 auf einen Transportwagen umgeladen werden. Gemäß der vorangegangenen Ausführungen bilden das Dreschwerk 3, der Hordenschüttler 4 und die Reinigungseinrichtung 6 die Arbeitsorgane 55 des Mähdreschers 1.
Der dargestellte Mähdrescher 1 ist zusätzlich mit einem an sich bekannten und daher hier nicht näher erläuterten Vorfahrtregler 53 ausgestattet, mit dem die Fahrgeschwindigkeit 54 des Mähdreschers 1 in Abhängigkeit von einem Parameter des Erntegutes automatisch gesteuert wird.
Die Abkühlung der Außentemperatur führt zu einer Kondensation des in der Luft 16 vorhandenen Wasserdampfanteiles 17 auf dem Erntegut 14. Die auf dem Erntegut 14 vorhandene Oberflächenfeuchte bewirkt, dass das Erntegut 26 teilweise aneinanderhaftet bzw. teilweise an den Arbeitsorganen 55 des Mähdreschers 1 anhaftet. Das wiederum hat eine Abnahme der Trenn- und Reinigungseffekte der Arbeitsorgane 55 zur Folge, wodurch die Qualität des Erntegutes 14 abnimmt. Um diesem Effekt entgegenzuwirken und eine gleichbleibende Qualität des Erntegutes 26 auch bei sich ändernden Erntebedingungen zu erreichen, wird die Oberflächenfeuchte des Erntegutes 26 bei der Wahl der im Weiteren noch näher beschriebenen Betriebsparameter berücksichtigt.
Die bereits erwähnte Auswert- und Anzeigeeinheit 19 umfasst ein Rechen- und Speichermodul 57 sowie eine grafische Anzeigeeinheit 58. Die von dem Taupunktsensor 15 auf an sich bekannte Weise an die Auswert- und Anzeigeeinheit 19 übermittelten Taupunktsignale T werden von dem Rechen- und Speichermodul 57 zu einer Taupunkttemperatur verrechnet und die Taupunkttemperatur auf der graphischen Anzeigeeinheit 58 angezeigt.
Aufgrund der auf der graphischen Anzeigeeinheit 58 angezeigten Taupunkttemperatur ändert ein Bediener 56 die Einstellung eines oder mehrerer Betriebsparameter von einem oder mehreren Arbeitsorganen 55 und/oder von einem oder mehreren Aufnahmevorsätzen 13 und/oder die Fahrgeschwindigkeit der als Mähdrescher 1 ausgeführten landwirtschaftlichen Arbeitsmaschine 2. Steigt die Oberflächenfeuchte auf dem Erntegut 14 an, erhöht der Bediener die Dreschtrommeldrehzahl 65 und verringert gleichzeitig den Dreschspalt 32, um die Dreschwirkung des Dreschwerks 3 zu erhöhen. Zusätzlich verringert der Bediener die Maschenweiten 45, 46 der Siebe 7, 8 und erhöht die Gebläsedrehzahl 66, um die schwereren Emtegutteilchen mit der Reinigungseinrichtung 6 mehr zu Sichten als zu Sieben. Steigt die Qualität des Ernteguts trotz der Änderung der vorgenannten Betriebsparameter am Dreschwerk 3 und der Reinigungseinrichtung 6 nicht, so reduziert er die Fahrgeschwindigkeit 54 um den Erntegutdurchsatz zu verringern.

Damit in erfindungsgemäßer Weise eine vollautomatische Regelung eines oder mehrerer Betriebsparameter in Abhängigkeit von dem ermittelten Taupunktsignal T erfolgen kann, ist der Auswert- und Anzeigeeinheit 19 eine Steuereinheit 61 zugeordnet, die mit wenigstens einem Arbeitsorgan 55 und/oder wenigstens einem Aufnahmevorsatz 13 verbunden ist. Die Steuereinheit 61 beinhaltet mehrere Kennlinien 69, mit denen unterschiedliche Betriebsparameter geregelt werden.
Die Steuereinheit 61 wertet das vom Taupunktsensor 15 zur Verfügung gestellte Taupunktsignal T aus. In Abhängigkeit vom Taupunktsignal T werden dann Steuerbefehle aus den Kennlinien 69 ausgewählt und an die Arbeitsorgane 55 und/oder den Aufnahmevorsatz 13 und/oder die Vorfahrtregler 53 gegeben, um die Betriebsparameter einzustellen.
Mit der Steuereinheit 61 können auf diese an sich bekannte Weise zum Beispiel die Betriebsparameter des Schneidwerks 12 geregelt werden. Hierzu gehören die Schneidwerkshöhe 18, die Höhe 22 und der Abstand 23 der Haspel 21 bezüglich des Schneidtischs 20, die Haspeldrehzahl 62 und die Einzugsschneckendrehzahl 63.
Die Steuereinheit 61 kann auch die Betriebsparameter des Dreschwerks 3 regeln. Hierzu gehört beispielsweise die Dreschtrommeldrehzahl 65 und die Öffnungsweite des Dreschspalts 32 zwischen der Dreschtrommel 30 und dem Dreschkorb 31. Die Steuereinheit 61 generiert unter anderem in Abhängigkeit vom Taupunktsignal T ein Dreschtrommeldrehzahlsignal D mit dem die Dreschtrommeldrehzahl 65 geregelt wird. Bei steigender Oberflächenfeuchte auf dem Erntegut 14 wird beispielsweise die Dreschtrommeldrehzahl D erhöht und gleichzeitig der Dreschspalt verringert.
Des weiteren kann die Steuereinheit 61 die Betriebsparameter der Reinigungseinrichtung 6 regeln, hierzu zählen die Gebläsedrehzahl 66 des Gebläses 9 und die Maschenweiten 45, 46 der Siebe 7, 8. Steigt die Oberflächenfeuchte auf dem Erntegut 14 an, werden die Maschenweiten 45, 46 der Siebe 7, 8 verkleinert und gleichzeitig die Gebläsedrehzahl 66 erhöht.
Schließlich ist es möglich, dass die Steuereinheit 61 mit dem Vorfahrtregler 53 verbunden ist. Die Steuereinheit 61 generiert dazu in Abhängigkeit vom Taupunktsignal T ein Vorfahrtgeschwindigkeitssignal V mit dem die Fahrgeschwindigkeit 54 geregelt wird. Die Fahrgeschwindigkeit 54 wird bei ansteigender Oberflächenfeuchte auf dem Erntegut 14 verringert.

An verschiedenen Arbeitsorganen 55 des Mähdreschers 1 können weitere Taupunktsensoren 70, 71, 72, 73 angeordnet sein, die eine Erfassung der Veränderung und Verteilung der Oberflächenfeuchte des Ernteguts auf seinem Weg durch den Mähdrescher 1 ermöglichen und somit anzeigen, bei welchen Arbeitorganen 55 die Einstellung der Betriebsparameter in Abhängigkeit von der Oberflächenfeuchte des Erntegutes 14, 26 sinnvoll ist.
Hierfür kann ein weiterer Taupunktsensor 72 im Einzugskanal 10 des Mähdreschers 1 die Oberflächenfeuchte des geernteten Ernteguts 14 erfassen.
Zudem kann ein Taupunktsensor 73 im Bereich des Dreschwerks 3 die Oberflächenfeuchte des am Dreschkorb 31 abgeschiedenen Kom-Spreu-Gemischs 33 erfassen. Es ist auch denkbar einen weiteren Taupunktsensor 71 im Bereich der Trennvorrichtung 5 anzuordnen, welcher die Oberflächenfeuchte des auf den Hordenschüttlern 4 geförderten, im Wesentlichen aus Stroh bestehenden Gutstroms 37 erfasst.
Um die Oberflächenfeuchte des der Reinigungeinrichtung 6 zugeführten Gemischs aus Körnern 38, Kurzstroh 39 und Spreu 40 zu erfassen, ist ein weiterer Taupunktsensor 70, im Bereich der Siebe 7, 8 der Reinigungseinrichtung 6 angeordnet.
Jeder dieser weiteren Taupunktsensoren 70, 71, 72, 73 arbeitet in analoger Weise nach dem für den am Aufnahmevorsatz 13 angeordnetem Taupunktsensor 15 bereits beschriebenen Prinzip.

Es liegt im Rahmen der Erfindung das der erfindungsgemäße Taupunktsensor auch bei diversen anderen landwirtschaftlichen Arbeitsmaschinen 2 wie beispielsweise Ballenpressen zum Einsatz kommen kann, um die erfindungsgemäßen Effekte zu erzielen.

### Bezugszeichenliste:

- 1: Mähdrescher
- 2: Landw. Arbeitsmaschine
- 3: Dreschwerk
- 4: Hordenschüttler
- 5: Trennvorrichtung
- 6: Reinigungseinrichtung
- 7: Sieb
- 8: Sieb
- 9: Gebläse
- 10: Einzugschacht
- 12: Schneidwerk
- 13: Aufnahmevorsatz
- 14: Zu emtendes Erntegut
- 15: Taupunktsensor
- 16: Luft
- 17: Wasserdampfanteil
- 18: Schneidwerkshöhe
- 19: Auswerte- und Anzeigeeinheit
- 20: Schneidtisch
- 21: Haspel
- 22: Höhe der Haspel
- 23: Abstand der Haspel
- 25: Messerbalken
- 26: Erntegut
- 27: Einzugsschnecke
- 28: Schrägförderer
- 29: Vorbeschleunigertrommel
- 30: Dreschtrommel
- 31: Dreschkorb
- 32: Dreschspalt
- 33: Korn-Spreu-Gemisch
- 34: Vorbereitungsboden
- 35: Körner
- 36: Nichtkornbestandteile
- 37: Gutstrom
- 38: Körner
- 39: Kurzstroh
- 40: Spreu
- 41: Sieböffnungen
- 42: Rücklaufboden
- 43: Sieböffnungen
- 44: Sieböffnungen
- 45: Maschenweite
- 46: Maschenweite
- 47: Führungsboden
- 48: Kornförderschnecke
- 49: Kornelevator
- 50: Korntank
- 51: Korntankentleerrohr
- 52: Wendetrommel
- 53: Vorfahrtregler
- 54: Fahrgeschwindigkeit
- 55: Arbeitsorgan
- 56: Bediener
- 57: Rechen- und Speichermodul
- 58: graphische Anzeige
- 61: Steuereinheit
- 62: Haspeldrehzahl
- 63: Einzugsschneckendrehzahl
- 65: Dreschtrommeldrehzahl
- 66: Gebläsedrehzahl
- 67: Schwingfrequenz
- 69: Kennlinien
- 70: weiterer Taupunktsensor
- 71: weiterer Taupunksensor
- 72: weiterer Taupunktsensor
- 73: weiterer Taupunksensor
- T: Taupunktsignal
- D: Dreschtrommeldrehzahlsignal
- V: Vorfahrtgeschwindigkeitssignal

## Patentansprüche

1. Landwirtschaftliche Arbeitsmaschine (2) mit einer Messvorrichtung zur Messung von wenigstens einem Parameter in der landwirtschaftlichen Arbeitsmaschine (2), wobei die landwirtschaftliche Arbeitsmaschine (2) aus zumindest einem Aufnahmevorsatz (13) zur Aufnahme von Erntegut (14) und wenigstens einem Arbeitsorgan (55) zur Behandlung des Erntegutes (26) besteht,
**dadurch gekennzeichnet,**
**dass** wenigstens ein Taupunktsensor (15) zur Sensierung der das Erntegut (14, 26) umgebenden Luft (16) an der Arbeitsmaschine (2) vorgesehen ist.

2. Landwirtschaftliche Arbeitsmaschine mit einer Messvorrichtung nach Anspruch 1,
**dadurch gekennzeichnet,**
**dass** der Taupunktsensor (15, 70-73) in unmittelbarer Nähe zum Erntegut (14) am Aufnahmevorsatz (13) und/oder in unmittelbarer Nähe zum Erntegut (26) am Arbeitsorgan (55) angeordnet ist.

3. Landwirtschaftliche Arbeitsmaschine mit einer Messvorrichtung nach wenigstens einem der vorhergehenden Ansprüche,
**dadurch gekennzeichnet,**
**dass** der Taupunktsensor (15, 70-73) ein vom kondensierten Wasserdampfanteil (17) der Luft (16) abhängiges Taupunksignal (T) erzeugt.

4. Landwirtschaftliche Arbeitsmaschine mit einer Messvorrichtung nach wenigstens einem der vorhergehenden Ansprüche,
**dadurch gekennzeichnet,**
**dass** der Taupunktsensor (15, 70-73) mit einer Auswerte- und Anzeigeeinheit (19) verbunden ist, die aus dem Taupunktsignal (T) eine Taupunkttemperatur berechnet und anzeigt.

5. Landwirtschaftliche Arbeitsmaschine mit einer Messvorrichtung nach Anspruch 4,
**dadurch gekennzeichnet,**
**dass** ein Bediener (56) aufgrund der auf der Auswerte- und Anzeigeeinheit (19) angezeigten Taupunkttemperatur die Einstellung wenigstens eines Betriebsparameters wenigstens eines Arbeitorgans (55) und/ oder wenigstens eines Aufnahmevorsatzes (13) und/oder die Fahrgeschwindigkeit der landwirtschaftlichen Arbeitsmaschine (2) verändert.

6. Landwirtschaftliche Arbeitsmaschine mit einer Messvorrichtung nach wenigstens einem der vorhergehenden Ansprüche,
**dadurch gekennzeichnet,**
**dass** der Taupunktsensor (15, 70-73) mit einer Steuereinheit (61) verbunden ist, die wenigstens einen Betriebsparameter wenigstens eines Arbeitsorgans (55) und/oder eines Aufnahmevorsatzes (13) der landwirtschaftlichen Arbeitsmaschine (2) in Abhängigkeit von dem vom Taupunktsensor (15, 70-73) an die Steuereinheit (61) übergebenen Taupunktsignal (T) ändert.

7. Landwirtschaftliche Arbeitsmaschine mit einer Messvorrichtung nach Anspruch 6,
**dadurch gekennzeichnet,**
**dass** die Steuereinheit (61) wenigstens eine Kennlinie (69) beinhaltet, mit der wenigstens ein Betriebsparameter geregelt wird.

8. Landwirtschaftliche Arbeitsmaschine mit einer Messvorrichtung nach wenigstens einem der vorhergehenden Ansprüche,
**dadurch gekennzeichnet,**
**dass** die landwirtschaftliche Arbeitsmaschine (2) ein selbstfahrender Mähdrescher (2) mit einem als Schneidwerk (12) ausgeführtem Aufnahmevorsatz (13) ist, wobei mehrere Taupunktsensoren (15) in unterschiedlichen Höhen an dem Schneidwerk (12) angeordnet sind.

9. Landwirtschaftliche Arbeitsmaschine mit einer Messvorrichtung nach Anspruch 8,
**dadurch gekennzeichnet,**
**dass** das Schneidwerk (12) mit der Steuereinheit (61) verbunden ist und die Steuereinheit (61) eine Schneidwerkshöhe (13) des Schneidwerks (12) in Abhängigkeit vom Taupunktsignal (T) regelt.

10. Landwirtschaftliche Arbeitsmaschine mit einer Messvorrichtung nach einem der Ansprüche 8 und 9,
**dadurch gekennzeichnet,**
**dass** das Schneidwerk (12) aus wenigstens einer Haspel (21) und einem mit einer Einzugsschnecke (27) ausgestatteten Schneidtisch (20) besteht, wobei die Steuereinheit (61) zumindest eine Haspeldrehzahl (62) und/oder die Höhe (22) und den Abstand (23) der Haspel (21) bezüglich des Schneidtischs (20) und /oder eine Drehzahl (63) der Einzugsschnecke(27) in Abhängigkeit von dem Taupunktsignal (T) regelt

11. Landwirtschaftliche Arbeitsmaschine mit einer Messvorrichtung nach einem der Ansprüche 6 bis 7 und 9 bis 10,
**dadurch gekennzeichnet,**
**dass** der Mähdrescher (2) zumindest mit wenigstens einem Vorfahrtregler (53) ausgestattet ist, der mit der Steuereinheit (61) verbunden ist, wobei die Steuereinheit (61) zumindest eine Fahrgeschwindigkeit (54) des Mähdreschers (2) in Abhängigkeit von dem Taupunktsignal (T) regelt.

12. Landwirtschaftliche Arbeitsmaschine mit einer Messvorrichtung nach einem der Ansprüche 6 bis 7 und 9 bis 11,
**dadurch gekennzeichnet,**
**dass** der Mähdrescher (2) zumindest ein Dreschwerk (3) aufnimmt, welches von wenigstens einer Dreschtrommel (30) und einem die Dreschtrommel (30) teilweise umschlingenden Dreschkorb (31) gebildet wird und das Dreschwerk (3) mit der Steuereinheit (61) verbunden ist, wobei die Steuereinheit (61) zumindest eine Dreschtrommeldrehzahl (65) der wenigstens einen Dreschtrommel (30) und/oder einen Dreschspalt (32) zwischen dem wenigstens einen Dreschkorb (31) und der Dreschtrommel (30) in Abhängigkeit von dem Taupunktsignal (T) regelt.

13. Landwirtschaftliche Arbeitsmaschine mit einer Messvorrichtung nach einem der Ansprüche 6 bis 7 und 9 bis 12,
**dadurch gekennzeichnet,**
**dass** der Mähdrescher (1) mit zumindest einer Reinigungseinrichtung (6) ausgestattet ist, welche aus wenigstens einem Sieb (7, 8) und wenigstens einem Gebläse (9) besteht und die Reinigungseinrichtung (6) mit der Steuereinheit (61) verbunden ist, wobei die Steuereinheit (61) zumindest eine Maschenweite (45, 46) des wenigstens einen Siebs (7, 8) und eine Gebläsedrehzahl (66) des wenigstens einen Gebläses (9) und/oder eine Schwingfrequenz (67) der Reinigungseinrichtung (6) in Abhängigkeit von dem Taupunktsignal (T) regelt.

14. Landwirtschaftliche Arbeitsmaschine mit einer Messvorrichtung nach Anspruch 13,
**dadurch gekennzeichnet,**
**dass** wenigstens ein weiterer Taupunktsensor (70) im Bereich der Siebe (7, 8) der Reinigungseinrichtung (6) angeordnet ist.

15. Landwirtschaftliche Arbeitsmaschine mit einer Messvorrichtung nach Anspruch 2,
**dadurch gekennzeichnet,**
**dass** das Arbeitsorgan (55) als Trennvorrichtung (5) ausgeführt ist und wenigstens ein weiterer Taupunktsensor (71) im Bereich der Trennvorrichtung (5) des Mähdreschers (1) angeordnet ist.

16. Messvorrichtung nach einem der vorhergehenden Ansprüche,
**dadurch gekennzeichnet,**
**dass** der landwirtschaftlichen Arbeitsmaschine (2) ein Einzugsschacht (10)
zugeordnet ist und wobei wenigstens ein weiterer Taupunktsensor (72) an dem Einzugsschacht (10) des Mähdreschers (1) angeordnet ist.

17. Landwirtschaftliche Arbeitsmaschine mit einer Messvorrichtung nach Anspruch 12,
**dadurch gekennzeichnet,**
**dass** der landwirtschaftlichen Arbeitsmaschine (2) wenigstens ein weiterer Taupunktsensor (73) im Bereich des Dreschwerks (3) des Mähdreschers (1) angeordnet ist.

## Claims

1. An agricultural working machine (2) having a measuring device for measuring at least one parameter in the agricultural working machine (2), wherein the agricultural working machine (2) comprises at least one pickup attachment (13) for picking up crop material (14) and at least one working member (55) for treating the crop material (26),
**characterised in that**
there is provided at least one dew point sensor (15) for sensing the air (16) surrounding the crop material (14, 26) on the working machine (2).

2. An agricultural working machine having a measuring device according to claim 1 **characterised in that** the dew point sensor (15, 70-73) is arranged in the immediate proximity of the crop material (14) on the pickup attachment (13) and/or in the immediate proximity of the crop material (26) on the working member (55).

3. An agricultural working machine having a measuring device according to at least one of the preceding claims **characterised in that** the dew point sensor (15, 70-73) produces a dew point signal (T) dependent on the condensed proportion of water vapour (17) in the air (16).

4. An agricultural working machine having a measuring device according to at least one of the preceding claims **characterised in that** the dew point sensor (15, 70-73) is connected to an evaluation and display unit (19) which calculates a dew point temperature from the dew point signal (T) and displays same.

5. An agricultural working machine having a measuring device according to claim 4 **characterised in that** on the basis of the dew point temperature displayed on the evaluation and display unit (19) an operator (56) alters the setting of at least one operating parameter of at least one working member (55) and/or at least one pickup attachment (13) and/or the travel speed of the agricultural working machine (2).

6. An agricultural working machine having a measuring device according to at least one of the preceding claims **characterised in that** the dew point sensor (15, 70-73) is connected to a control unit (61) which alters at least one operating parameter of at least one working member (55) and/or a pickup attachment (13) of the agricultural working machine (2) in dependence on the dew point signal (T) passed by the dew point sensor (15, 70-73) to the control unit (61).

7. An agricultural working machine having a measuring device according to claim 6 **characterised in that** the control unit (61) contains at least one characteristic curve (69) with which at least one operating parameter is regulated.

8. An agricultural working machine having a measuring device according to at least one of the preceding claims **characterised in that** the agricultural working machine (2) is a self-propelled combine harvester (2) having a pickup attachment (13) in the form of a cutting mechanism (12), wherein a plurality of dew point sensors (15) are arranged at different heights on the cutting mechanism (12).

9. An agricultural working machine having a measuring device according to claim 8 **characterised in that** the cutting mechanism (12) is connected to the control unit (61) and the control unit (61) regulates a cutting mechanism height (13) of the cutting mechanism (12) in dependence on the dew point signal (T).

10. An agricultural working machine having a measuring device according to one of claims 8 and 9 **characterised in that** the cutting mechanism (12) comprises at least one reel (21) and a cutting table (20) provided with a draw-in screw (27), wherein the control unit (61) regulates at least a reel rotary speed (62) and/or the height (22) and the spacing (23) of the reel (21) with respect to the cutting table (20) and/or a rotary speed (63) of the draw-in screw (27) in dependence on the dew point signal (T).

11. An agricultural working machine having a measuring device according to one of claims 6 to 7 and 9 to 10 **characterised in that** the combine harvester (2) is provided at least with at least one forward travel regulator (53) connected to the control unit (61), wherein the control unit (61) regulates at least one travel speed (54) of the combine harvester (2) in dependence on the dew point signal (T).

12. An agricultural working machine having a measuring device according to one of claims 6 to 7 and 9 to 11 **characterised in that** the combine harvester (2) mounts at least one threshing mechanism (3) formed by at least one threshing drum (30) and a concave (31) partially extending around the threshing drum (30) and the threshing mechanism (3) is connected to the control unit (61), wherein the control unit (61) regulates at least one threshing drum rotary speed (65) of the at least one threshing drum (30) and/or a threshing gap (32) between the at least one concave (31) and the threshing drum (30) in dependence on the dew point signal (T).

13. An agricultural working machine having a measuring device according to one of claims 6 to 7 and 9 to 12 **characterised in that** the combine harvester (1) is provided with at least one cleaning device (6) comprising at least one sieve (7, 8) and at least one fan (9) and the cleaning device (6) is connected to the control unit (61), wherein the control unit (61) regulates at least one mesh width (45, 46) of the at least one sieve (7, 8) and a fan rotary speed (66) of the at least one fan (9) and/or an oscillation frequency (67) of the cleaning device (6) in dependence on the dew point signal (T).

14. An agricultural working machine having a measuring device according to claim 13 **characterised in that** at least one further dew point sensor (70) is arranged in the region of the sieves (7, 8) of the cleaning device (6).

15. An agricultural working machine having a measuring device according to claim 2 **characterised in that** the working member (55) is in the form of a separating device (5) and at least one further dew point sensor (71) is arranged in the region of the separating device (5) of the combine harvester (1).

16. A measuring device according to one of the preceding claims **characterised in that** a draw-in shaft (10) is associated with the agricultural working machine (2) and wherein at least one further dew point sensor (72) is arranged at the draw-in shaft (10) of the combine harvester (1).

17. An agricultural working machine having a measuring device according to claim 12 **characterised in that** on the agricultural working machine (2) at least one further dew point sensor (73) is arranged in the region of the threshing mechanism (3) of the combine harvester (1).

## Revendications

1. Machine agricole (2) équipée d'un dispositif de mesure d'au moins un paramètre de la dite machine qui comprend au moins un dispositif de prise (13) pour accueillir le produit à récolter (14) et au moins un organe de travail (55) pour traiter le produit récolté (26), cette machine étant **caractérisée en ce qu'**il est prévu sur cette machine (2) au moins un capteur de point de rosée (15) pour détecter l'air (16) environnant le produit de récolte (14, 26).

2. Machine agricole équipée d'un dispositif de mesure selon la revendication 1, **caractérisée en ce que** le capteur de point de rosée (15, 70, 73) est placé sur le dispositif de prise (13) à proximité directe du produit à récolter (14) et/ou sur l'organe de travail à proximité directe du produit récolté (26).

3. Machine agricole équipée d'un dispositif de mesure selon au moins une des revendications précédentes, **caractérisée en ce que** le capteur de point de rosée (15, 70-73) produit un signal de point de rosée (T) qui dépend de la fraction de la vapeur d'eau (17) de l'air (16) qui est condensée.

4. Machine agricole équipée d'un dispositif de mesure selon au moins une des revendications précédentes, **caractérisée en ce que** le capteur de point de rosée (15, 70-73) est relié à une unité d'indication et d'évaluation (19) qui, à partir du signal de point de rosée, calcule et fait connaître une température de point de rosée.

5. Machine agricole équipée d'un dispositif de mesure selon la revendication 4, **caractérisée en ce qu'**un opérateur (56), sur la base de la température de point de rosée donnée par l'unité d'indication et d'évaluation (19) fait varier le réglage d'un paramètre de fonctionnement d'au moins un organe de travail (55) et/ou d'au moins un dispositif de prise (13) et/ou la vitesse de déplacement de la machine agricole (2).

6. Machine agricole équipée d'un dispositif de mesure selon au moins une des revendications précédentes, **caractérisée en ce que** le capteur de point de rosée (15, 70-73) est relié à une unité de commande (61) qui fait varier au moins un paramètre de fonctionnement (13) de la machine agricole (2) en fonction du signal de point de rosée (T) transmis à l'unité de commande (61) par le capteur de point de rosée (15, 70-73).

7. Machine agricole équipée d'un dispositif de mesure selon la revendication 6, **caractérisée en ce que** l'unité de commande (61) contient au moins une caractéristique (69) au moyen de laquelle est régulé un paramètre de fonctionnement.

8. Machine agricole équipée d'un dispositif de mesure selon au moins une des revendications précédentes, **caractérisée en ce que** la machine agricole (2) est une moissonneuse-batteuse automotrice (1) équipée d'un dispositif de prise (13) sous la forme d'un outil de coupe (12), sur lequel sont disposés à diverses hauteurs plusieurs capteurs de point de rosée (15).

9. Machine agricole équipée d'un dispositif de mesure selon la revendication 8, **caractérisée en ce que** l'outil de coupe (12) est relié à l'unité de commande (61) et que celle-ci régule, en fonction du signal de point de rosée (T), la hauteur (13) de l'outil de coupe (12).

10. Machine agricole équipée d'un dispositif de mesure selon une des revendications 8 et 9, **caractérisée en ce que** l'outil de coupe (12) est composé d'au moins un rabatteur (21) et d'une table de coupe (20) comprenant une vis d'entrée (27), l'unité de commande (61) régulant au moins la vitesse de rotation (62) du rabatteur et/ou la hauteur (22) et l'espacement (23) de ce rabatteur par rapport à la table de coupe (20) et/ou la vitesse de rotation (63) de la vis d'entrée (27) en fonction du signal de point de rosée (T).

11. Machine agricole équipée d'un dispositif de mesure selon une des revendications 6, 7, 9, 10, **caractérisée en ce que** la moissonneuse-batteuse (1) est équipée d'au moins un régulateur d'avance (53) relié à l'unité de commande (61) qui régule au moins une vitesse de déplacement (54) de la moissonneuse-batteuse (1) en fonction du signal de point de rosée (T).

12. Machine agricole équipée d'un dispositif de mesure selon une des revendications 6, 7, 9 à 11, **caractérisée en ce que** la moissonneuse-batteuse (1) comprend au moins un outil de battage (3) constitué d'au moins un tambour de battage (30) et d'une corbeille de battage (31) entourant au moins en partie ce tambour, l'outil de battage (3) étant relié à l'unité de commande (61) qui régule, en fonction du signal de point de rosée (T) la vitesse de rotation(65) de l'outil de battage (30) au nombre d'un au moins et/ou une fente de battage (32) entre la corbeille de battage (31) et le tambour de battage (30).

13. Machine agricole équipée d'un dispositif de mesure selon une des revendications 6, 7, 9 à 12, **caractérisée en ce que** la moissonneuse-batteuse (1) est équipée d'au moins un dispositif de purification (6) composée d'au moins un crible (7, 8) et d'au moins une soufflante (9), le dispositif de purification (6) étant relié à une unité de commande (61) qui régule au moins une dimension de maille (45, 46) d'un crible (7, 8) au nombre d'un au moins ainsi que la vitesse de rotation (66) de la soufflante (9) au nombre d'une au moins et/ou une fréquence d'oscillation (67) du dispositif de purification (6) en fonction du signal de point de rosée (T).

14. Machine agricole équipée d'un dispositif de mesure selon la revendication 13, **caractérisée en ce qu'**au moins un autre capteur de point de rosée (70) est disposé dans la zone des cribles (7, 8) du dispositif de purification (6).

15. Machine agricole équipée d'un dispositif de mesure selon la revendication 2 , **caractérisée en ce que** l'organe de travail (55) est un dispositif de séparation (5) et qu'un autre capteur de point de rosée (71) est disposé dans la zone de ce dispositif de séparation (5).

16. Machine agricole équipée d'un dispositif de mesure selon une des revendications précédentes, **caractérisée en ce qu'**à la machine agricole (2) est associé un puits d'entrée (10) et que sur ce puits est disposé au moins un autre capteur de point de rosée (72) de la moissonneuse-batteuse.

17. Machine agricole équipée d'un dispositif de mesure selon la revendication 12, **caractérisée en ce qu'**à la machine agricole (2) est associé au moins un autre capteur de point de rosée (73) disposé dans la zone de l'outil de battage (3) de la moissonneuse-batteuse (1).
